**Europäisches Patentamt**

**European Patent Office**

**Office européen des brevets**

(11) Veröffentlichungsnummer: **0 351 665**

**A1**

# (12) EUROPÄISCHE PATENTANMELDUNG

(21) Anmeldenummer: **89112417.4**

(22) Anmeldetag: **07.07.89**

(51) Int. Cl.4: **B01D 46/34 , B01D 53/08**

(30) Priorität: **21.07.88 DE 3824728**

(43) Veröffentlichungstag der Anmeldung:
**24.01.90 Patentblatt 90/04**

(84) Benannte Vertragsstaaten:
**AT CH DE FR GB LI NL SE**

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Thielen, Walter, Dr.**
**Karlsbader Strasse 8a**
**D-5270 Gummersbach(DE)**
Erfinder: **Thomas, Gerhard**
**Vollmerhauser Strasse 15**
**D-5270 Gummersbach 31(DE)**

(74) Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

(54) **Vorrichtung zur Aufnahme von körnigem und von einem Gasstrom durchströmten Schüttgut.**

(57) Bei bekannten Vorrichtungen besteht die Gefahr, daß das über einen oder wenige Gaseintritte in den Gassammelraum einströmende Gas Schüttgut aus der aus Jalousiebleche aufgebauten Schachtbegrenzungswand austrägt. Die neue Vorrichtung soll eine Vergleichmäßigung der Anströmung der Jalousie erzielen und zugleich einen rückwärts gerichteten Austrag vermeiden.

In dem Gasverteilungsraum 6 wird vor der Jalousie 4 und mit Abstand von ihr ein Öffnungen 9 aufweisender flächiger Gasverteilungseinbau vorgesehen, und der Zwischenraum zwischen dem flächigen Gasverteilungseinbau 7 und der Jalousie 4 durch eine Vielzahl von sich horizontal erstreckenden Unterteilungswänden 10 in eine Vielzahl von Beruhigungskammern 11 unterteilt, die jeweils einer vorgegebenen Anzahl von Jalousieschlitzen zugeordnet sind, wobei die Unterteilungswände jeweils auf ein Jalousieblech 3' der zugeordneten Jalousieschlitze 4' derart ausgerichtet sind, daß sich auf der Unterteilungswand ablagerndes Schüttgut in den Jalousieschlitz zurückgeleitet wird.

Hauptanwendungsgebiet ist das Verfahren zur Entfernung von Schefeloxiden und/oder Stickoxiden aus Abgasen, die durch eine Schicht aus einem besonders feinteiligen kohlenstoffhaltigen Adsorptionsmittel, insbesondere Aktivkoks, hindurchgeleitet werden.

## Vorrichtung zur Aufnahme von körnigem und von einem Gasstrom durchströmten Schüttgut

Die Erfindung betrifft eine Vorrichtung zur Aufnahme von körnigem Schüttgut mit einem Schacht, den das Schüttgut von oben nach unten durchwandert, einem vor dem Schacht angeordneten Gasverteilungsraum mit mindestens einem Gaseintritt und einem hinter dem Schacht angeordneten Gassammelraum mit mindestens einem Gasaustritt, wobei die Schachtwände gasdurchlässig sind und zumindest die Schachtwand an der Gaseintrittsseite aus schräggestellten und in einem Abstand voneinander und parallel zueinander angeordneten und sich horizontal erstreckenden Jalousieblechen (Jalousie) gebildet ist, die zwischen sich jeweils einen Jalousieschlitz begrenzen.

Eine solche Vorrichtung wird z. B. bei Verfahren zur adsorptiven Entfernung von Schwefeloxiden und/oder zur Entfernung von Stickoxiden aus Abgasen verwendet, wobei durch den Schacht eine Schicht eines körnigen kohlenstoffhaltigen Adsorptionsmittels wandert (DE-OS 29 11 712). Auch kann die Vorrichtung als Granulatfilter zum Entstauben von Gas verwendet werden, wie dies in der EP-B1-0169 606 beschrieben ist.

Das in den Gasverteilungsraum über den Gaseintritt eintretende Gas bildet in dem Gasverteilungsraum Strähnen und/oder Wirbel, die Schüttgut aus den nach oben offenen Taschen zwischen den Jalousieblechen entgegen der Gasströmung austragen, das sich unten in dem Gassammelraum ablagert. Bei den bekannten Vorrichtungen besteht somit die Gefahr einer ungleichmäßigen Anströmung der einzelnen Jalousieschlitze und/oder die Gefahr des sogenannten Rückwärtsaustrags des körnigen Schüttguts, z. B. des feinteiligen Kokses im Falle der Entfernung von $SO_X$ und/oder $NO_X$, aus den Taschen.

Es ist daher die Aufgabe der vorliegenden Erfindung eine Vorrichtung der im Oberbegriff des Anspruches 1 genannten Art zu schaffen, bei der eine Vergleichmäßigung der Anströmung der einzelnen Jalousieschlitze und eine weitgehendste Vermeidung des Schüttgutaustrags in den Gasverteilungsraum erreicht wird.

Diese Aufgabe wird dadurch gelöst, daß in dem Gasverteilungsraum vor der Jalousie und mit Abstand von ihr ein Öffnungen aufweisender flächiger Gasverteilungseinbau vorgesehen ist und der Zwischenraum zwischen dem flächigen Gasverteilungseinbau und der Jalousie durch eine Vielzahl von sich horizontal erstreckenden Unterteilungswänden in eine Vielzahl von Beruhigungskammern unterteilt ist, die jeweils einer vorgegebenen Anzahl von Jalousieschlitzen zugeordnet sind, wobei die Unterteilungswände jeweils auf ein Jalousieblech der zugeordneten Jalousieschlitze derart ausgerichtet sind, daß sich auf der Unterteilungswand ablagerndes Schüttgut in den Jalousieschlitz zurückgeleitet wird.

Durch den Gasverteilungseinbau wird erreicht, daß sich in dem Gasverteilungsraum bildende Strähnen vor Durchtritt durch den Gasverteilungseinbau vergleichmäßigen können und sich im Gasverteilungsraum bildende Wirbel nicht ungehindert in die oben offenen Taschen bzw. Schlitze zwischen den Jalousieblechen eingreifen können. Eventuell doch noch aus den Jalousieschlitzen ausgetragener Koks wird über die Unterteilungswände wieder in den Bereich der Schlitze zurückgeführt und daher beim Abzug des Schüttguts aus dem Schacht mit ausgetragen.

Da die Öffnungen in dem flächigen Gasverteilungseinbau nicht das Schüttgut abstützen müssen, kann ihre Größe ein Mehrfaches des Korndurchmessers des Schüttguts sein.

In weiter bevorzugter Weise weist der flächige Gasverteilungseinbau eine Vielzahl von zu den Jalousieschlitzen parallelen Schlitzen auf.

Um die Ableitung der evtl. rückwärts ausgetragenen Schüttgutteilchen zu unterstützen, sind die Unterteilungswände gegen die Eintrittsebene der Jalousie nach unten geneigt, wobei der Neigungswinkel ca. 60° nicht unterschreiten sollten.

Zu einem besonders einfachen Aufbau von flächigem Gasverteilungseinbau und Beruhigungskammern gelangt man, wenn abgewinkelte Bleche mit einem parallel zur Eintrittsebene der Jalousie verlaufenden Abschirmabschnitt und einem jeweils eine Unterteilungswand bildenden geneigten Wandabschnitt vorgesehen sind.

Auch ist es möglich, daß das Jalousieblech, auf das die Unterteilungswand ausgerichtet ist, einstückig mit der Unterteilungswand und gegebenenfalls mit dem Abschirmabschnitt ausgebildet ist.

Es ist möglich, daß die Jalousiebleche und die Unterteilungswände unterschiedliche Neigungswinkel aufweisen.

Weiterhin wird bevorzugt, daß die Teilung der Schlitze im Gasverteilungseinbau der Teilung der Schlitze in der Jalousie entspricht. Die Gasgeschwindigkeit in dem der Beruhigungskammer zugeordneten Eintrittsschlitz beträgt dann bei n von der Beruhigungkammer zu versorgenden Jalousieschlitzen das n-fache der Gasgeschwindigkeit in den Jalousieschlitzen.

Es erscheint auch zweckmäßig, daß der das Gas in eine Beruhigungskammer einleitende Schlitz in dem flächigen Gasverteilungseinbau am oberen Ende der Beruhigungskammer angeordnet ist. Bei geneigten Unterteilungswänden bedeutet dies dann, daß der Gaseintrittsschlitz für den Gaseintritt in die Beruhigungskammer immer oberhalb des obersten der von der Beruhigungskammer zu versorgenden Jalousieschlitze liegt.

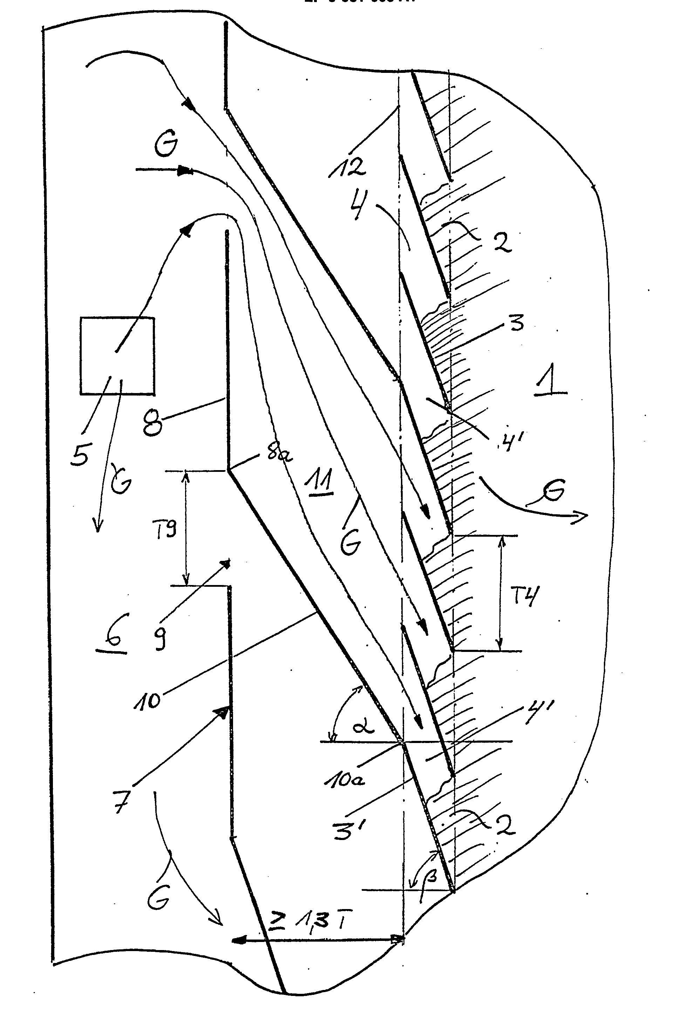

Die Erfingung soll nun anhand der beigefügten Figur genauer beschrieben werden.

Ein körniges Schüttgut 1 durchwandert einen Schacht 2 unter dem Einfluß der Schwerkraft von oben nach unten. (Hierbei kann ein fortlaufendes Wandern oder ein diskontinuierliches Wandern in Frage kommen.) Damit das in dem Schacht 2 befindliche Schüttgut von einem zu behandelnden Gas G durchströmt werden kann, ist der Schacht an seiner Eintrittsseite von einer Vielzahl von schräggestellten und in einem Abstand voneinander parallel zueinander und horizontal angeordneten Jalousieblechen 3 begrenzt, die zwischen sich Taschen oder Schlitze 4 bilden, in denen das Schüttgut in der aus der Figur ersichtlichen Weise eintritt.

Das zu behandelnde Gas tritt über einen Gaseintritt 5 in einen Gasveteilungsraum 6 ein, der auf der der Jalousie 4 zugewandten Seite von einem flächigen Gasverteilungseinbau 7 begrenzt ist. Der Gasverteilungseinbau besteht aus vertikal ausgerichteten und sich horizontal erstreckenden Abschirmblechen 8, die zwischen sich horizontal verlaufende Gasdurchtrittsschlitze 9 mit einer Breite bzw. Teilung T9 begrenzen. Die unteren Kanten 8a der Abschirmbleche gehen in gegen die Eintrittsebene 12 der Jalousie 4 unter einem Winkel α geneigte Unterteilungswände 10 über, deren untere Kante 10a andererseits mit der Kante des unteren Bleches 3' der Jalousiebleche 3 verbunden ist. Die Bauteile 7, 10, 3' können aus einem Blechstreifen hergestellt werden. Wie aus der Figur ersichtlich ist, kann der Neigungswinkel β , den die Jalousiebleche aufweisen, von dem Neigungswinkel α der Unterteilungswände 10 verschieden sein.

Bei der in der Figur gezeigten Ausführungsform wird jede Beruhigungskammer 11 von einem Abschirmblech 7 zwei Unterteilungswänden 10 und drei Taschen 4 der Jalousie begrenzt, wobei der Eintrittsschlitz 9 dem oberen Ende der Beruhigungskammer 11 zugeordnet ist und somit höhenmäßig oberhalb der obersten der zugeordneten Taschen angeordnet ist. Die Neigung der Untereilungswände 10, die bis auf die oberste und unterste Unterteilungskamer 11 jeweils Decken-und Bodenfunktion übernehmen, richtet sich nach dem Schüttwinkel des in dem Schacht geführten Schüttguts, um eine sichere Ableitung des evtl. rückwärts aus den Taschen ausgetragenen Materials zu der unteren Tasche 4' zu gewährleisten. Bei der in der Figur gezeigten Ausführungsform entspricht die Teilung T9 der Teilung T4 der Jalousieschlitze. Somit beträgt die Geschwindigkeit im Eintrittsschlitz 9 bei drei von der Kammer 11 zu versorgenden Jalousieschlitzen das 3fache der Gasgeschwindigkeit in diesen Schlitzen.

Weiterhin ist in der Figur dargestellt, daß der Abstand zwischen dem flächigen Einbau, d. h. den Abschirmblechen 8 und der Jalousieebene 12, vorzugsweise mindestens dem 1,3-fachen der Teilung T4 entspricht.

In der Figur ist der Strömungsverlauf der durch die Schlitze 9 eintretenden Strömungsfäden durch die Kammer in die Taschen 4 hinein skizziert. Falls durch örtliche Geschwindigkeitsüberhöhungen in den Eintrittsschlitzen 9 der Beruhigungskammern 11 durch Strähnen im Zustrom doch noch ein Schüttgutaustrag aus der Eintrittsjalousie auftritt, ist das bei der in der Figur gezeigten Anordnung ohne Bedeutung für deren Funktion, da einerseits dieses Schüttgut nicht entgegen der Gasströmung aus der Beruhigungskammer über die am oberen Ende angeordneten Schlitze 9 austreten kann, und andererseits das in die Kammer 11 ausgetretene Schüttgut auf dem geneigten Kammerboden bzw. Unterteilungswand 10 bei Koksabzug mit Sicherheit in die untere Tasche 4' zurücktransportiert wird und mit der Schüttgutschicht aus dem Schacht ausgetragen wird.

Bei der erfindungsgemäßen Anordnung wird also vermieden, daß die Gasverteilungskammer über teure Kanalverzweigungen mit einer Vielzahl von Gaseintritten mit dem zu behandelnden Gas beaufschlagt wird. Auch sind keine zusätzlichen Gasverteilungseinrichungen, wie z. B. Gleichdruckumlenkeinrichtungen, wie sie bei sehr großen Reaktorhöhen notwendig sein könnten, erforderlich. Die Bedeutung des flächigen Gasverteilungseinbaus und der Beruhigungskammern wird deutlich, wenn man berücksichtigt, daß z. B. bei einem 19 m hohen Schacht und einem einzigen etwa mittig angeordneten Gaseintritt 5 das in den Gasverteilungsraum 6 eintretende Gas eine Geschwindigkeit von etwa 15 m/sek. hat, während die Eintrittsgeschwindigkeit in der Jalousieeintrittsebene nur 0,5 m/sek. betragen soll. Bei so hohen Gaseintrittsgeschwindigkeiten in den Gasverteilungsraum, kommt es ohne flächigen Gasverteilungseinbau 7 in der Nähe der Jalousieeintrittsebene unweigerlich zu Wirbelbildungen, die zu dem angesprochen "Rückwärts"-Austrag von Schüttgut führen können.

Als Hauptanwendungsgebiet für die Vorrichtung wird das bereits angesprochene Verfahren zur Entfernung von Schefeloxiden und/oder Stickoxiden aus Abgasen angesehen, da hier ein besonders feinteiliges kohlenstoffhaltiges Adsorptionsmittel, insbesondere Aktivkoks, zum Einsatz kommt.

## Ansprüche

1. Vorrichtung zur Aufnahme von körnigem Schüttgut mit einem Schacht, den das Schüttgut von oben nach unten durchwandert, einem vor dem Schacht angeordneten Gasverteilungsraum mit mindestens einem Gaseintritt und einem hinter dem Schacht angeordneten Gassammelraum mit mindestens einem Gasaustritt, wobei die Schachtwände gasdurchlässig sind und zumindest die Schachtwand an der Gaseintrittsseite aus schräggestellten und in einem Abstand voneinander und parallel zueinander angeordneten und sich horizontal erstreckenden Jalousieblechen (Jalousie) gebildet ist, die zwischen sich jeweils einen Jalousieschlitz begrenzen, **dadurch gekennzeichnet, daß** in dem Gasverteilungsraum (6) vor der Jalousie (4) und mit Abstand von ihr ein Öffnungen (9) aufweisender flächiger Gasverteilungseinbau (7) vorgesehen ist und der Zwischenraum zwischen dem flächigen Gasverteilungseinbau (7) und der Jalousie (4) durch eine Vielzahl von sich horizontal erstreckenden Unterteilungswänden (10) in eine Vielzahl von Beruhigungskammern (11) unterteilt ist, die jeweils einer vorgegebenen Anzahl von Jalousieschlitzen (4) zugeordnet sind, wobei die Unterteilungswände (10) jeweils auf ein Jalousieblech (3') der zugeordneten Jalousieschlitze (4') derart ausgerichtet sind, daß sich auf der Unterteilungswand (10) ablagerndes Schüttgut (1) in den Jalousieschlitz zurückgeleitet wird.

2. Vorrichtung nach Anspruch 1, **dadurch gekennzeichnet, daß** der flächige Gasverteilungseinbau (7) eine Vielzahl von zu den Jalousieschlitzen (4) parallelen Schlitzen (9) aufweist.

3. Vorrichtung nach Anspruch 1 oder 2, **dadurch gekennzeichnet, daß** die Unterteilungswände (10) gegen die Eintrittsebene (12) der Jalousie nach unten geneigt sind.

4. Vorrichtung nach einem oder mehreren der Ansprüche 1 bis 3, **dadurch gekennzeichnet, daß** zum Aufbau von flächigem Gasverteilungseinbau und Beruhigungskammern (11) abgwinkelte Bleche mit einem parallel zur Eintrittsebene (12) der Jalousie (3) verlaufenden Abschirmabschnitt (7) und einem jeweils eine Unterteilungswand bildenden geneigten Wandabschnitt (10) vorgesehen sind.

5. Vorrichtung nach einem oder mehreren der Ansprüche 1 bis 4, **dadurch gekennzeichnet, daß** das Jalousieblech (3'), auf das die Unterteilungswand ausgerichtet ist, einstückig mit der Unterteilungswand (10) ausgebildet ist.

6. Vorrichtung nach einem oder mehreren der Ansprüche 1 bis 5, **dadurch gekennzeichnet, daß** die Jalousiebleche (4) und die Unterteilungswände unterschiedliche Neigungswinkel ($\alpha, \beta$) aufweisen.

7. Vorrichtung nach einem oder mehreren der Ansprüche 1 bis 6, **dadurch gekennzeichnet, daß** die Teilung (T9) der Schlitze (9) im Gasverteilungseinbau der Teilung (T4) der Schlitze (4) in der Jalousie entspricht.

8. Vorrichtung nach einem oder mehreren der Ansprüche 1 bis 7, **dadurch gekennzeichnet, daß** der das Gas in eine Beruhigungskammer (11) einleitende Schlitz (9) in dem flächigen Gasverteilungseinbau am oberen Ende der Beruhigungskammer angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 946 457 (CHEMIEBAU DR. A. ZIEREN GmbH & CO. KG) * Insgesamt * --- | 1 | B 01 D 46/34<br>B 01 D 53/08 |
| A | US-A-2 636 575 (K.M. WATSON) * Spalte 4, Zeile 53 - Spalte 5, Zeile 1; Figur 1 * --- | 1 | |
| A | US-A-4 601 736 (K. FIJIWARA) * Zusammenfassung; Figur 1 * ----- | 1 | |

RECHERCHIERTE SACHGEBIETE (Int. Cl.5)

B 01 D 46/00
B 01 D 53/00
B 01 J 8/00

Der vorliegende Recherchenbericht wurde für alle Patentansprüche erstellt

| Recherchenort | Abschlußdatum der Recherche | Prüfer |
|---|---|---|
| DEN HAAG | 04-10-1989 | POLESAK, H.F. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument